# EUROPÄISCHE PATENTANMELDUNG

(11) **EP 2 116 489 A1**
(43) Veröffentlichungstag der Anmeldung: **11.11.2009**
(21) Anmeldenummer: 09159899.5
(22) Anmeldetag: 11.05.2009
(51) Int. Cl.: B65G 17/46, B65G 15/58

(54) **Transportvorrichtung mit Vakuumversorgung**

(30) Priorität: 09.05.2008 DE 102008023111
(71) Anmelder: Gerhard Schubert GmbH, 74564 Crailsheim (DE)
(72) Erfinder: Schubert, Gerhard, 74564, Crailsheim (DE)
(74) Vertreter: Alber, Norbert

(57) **Zusammenfassung**

Um Transportschlitten (1a,b...) mit Unterdruck-Saugern (15) (zum Halten der Produkte) mit Unterdruck aus ihrer Führungsbahn (2a,b) zu versorgen, kann eine permanente oder nur sporadische Verbindung mit der Unterdruckleitung (31') in der Führungsbahn vorgesehen werden. Auch der Antrieb des Transportschlittens kann über diese Unterdruckverbindung realisiert werden.

## Beschreibung

### I. Anwendungsgebiet

Die Erfindung betrifft eine bahngebundene Transportvorrichtung mit Unterdruckbeaufschlagten Transportschlitten.

### II. Technischer Hintergrund

In der Industrie sind Transportvorrichtungen in großer Vielfalt bekannt, um beispielsweise Produkte von einer Bearbeitungsstation zur nächsten zu transportieren.

Insbesondere in der Verpackungstechnik werden solche bahngebundenen Transportvorrichtungen verwendet, bei denen entlang der einen oder mehreren Transportbahnen eine Vielzahl von Transportschlitten verfahren werden, auf denen Produkte einzeln oder gruppenweise transportiert werden.

Die Produkte werden auf den Transportschlitten teilweise mechanisch, insbesondere formschlüssig, festgehalten, in der jüngeren Vergangenheit jedoch häufig auch mittels Unterdruck-Saugern, da hierdurch keine konkrete Anpassung der Form der Transportschlitten an das jeweilige zu transportierende Produkt notwendig ist.

Eine solche Transportvorrichtung ist beispielsweise aus der DE 10 2007 059 611.3 bekannt.

Wenn die einzelnen Transportschlitten mit Unterdruck-Saugern ausgestattet sind, erfordert dies eine Unterdruck-Zufuhr zu den einzelnen Transportschlitten.

Unabhängig davon benötigen die einzelnen Transportschlitten natürlich auch einen gesteuerten Antrieb entlang der Führungsbahn, der mechanisch, elektrisch oder auf andere Art und Weise ausgeführt sein kann.

### III. Darstellung der Erfindung

### a) Technische Aufgabe

Es ist daher die Aufgabe gemäß der Erfindung, eine Unterdruckversorgung für die Transportschlitten zu schaffen, die einfach und kostengünstig herzustellen ist und insbesondere zusätzlich den Längsantrieb für die Transportschlitten mit beinhaltet.

### b) Lösung der Aufgabe

Diese Aufgabe wird durch die Merkmale des Anspruchs 1 gelöst. Vorteilhafte Ausführungsformen ergeben sich aus den Unteransprüchen.

Da sich die Transportschlitten entlang der Führungsbahn bewegen, ist eine Zuführung von Unterdruck sinnvollerweise nur über die Führungsbahn möglich. Dabei lassen sich zwei prinzipiell unterschiedliche Vorgehensweisen unterscheiden:

Entweder steht der Transportschlitten mit der Unterdruckleitung, die entlang der Transportbahn verläuft, permanent in Verbindung, oder er wird nur zeitlich beabstandet mit der Unterdruckleitung in der Führungsbahn verbunden.

In letzterem Fall sollte der Transportschlitten ein Unterdruckreservoir aufweisen, um in den Zeiträumen zwischen Verbindung mit der Unterdruckversorgung die Produkte mit Hilfe der Sauger zuverlässig am Transportschlitten halten zu können, selbst wenn in diesem Zeitraum das neue Beaufschlagen eines oder mehrerer Sauger mit Unterdruck notwendig wird, beispielsweise weil ein neues Produkt am Transportschlitten festgehalten werden muss.

Das jeweils zeitlich begrenzte Anschließen an die Unterdruckversorgung erfolgt, indem an bestimmten Längspositionen der Führungsbahn Zapföffnungen angeordnet sind, die mit der in Längsrichtung der Führungsbahn verlaufenden Unterdruckleitung über jeweils ein Sperrventil in Verbindung stehen und im Transportschlitten in der der Führungsbahn zugewandten Unterseite wenigstens eine Anschlussöffnung für Unterdruck vorhanden ist, die mit jeweils einer der Zapföffnungen koppelbar ist, wenn sich der Transportschlitten an der entsprechenden Längsposition der Führungsbahn befindet.

Auch die Anschlussöffnung im Transportschlitten ist über ein Sperrventil gegenüber der Unterdruckleitung und den Saugern und gegebenenfalls auch dem Reservoir im Transportschlitten absperrbar.

Die Transportvorrichtung umfasst ferner eine Steuerung, die dafür sorgt, dass nur diejenigen Zapföffnungen entlang der Führungsbahn durch Öffnen des Sperrventils mit Unterdruck beaufschlagt sind, die momentan in Kontakt mit einer Anschlussöffnung eines Transportschlittens steht, was beispielsweise durch Detektion der Tatsache, ob sich ein Transportschlitten an der dafür geeigneten Position befindet, geschehen kann.

Die Zapföffnungen entlang der Führungsbahn befinden sich beispielsweise am Anfang und Ende der Führungsbahn, also entsprechend der Anfangs- und Endposition eines Transportschlittens auf der Führungsbahn, und/oder dazwischen an Haltepositionen, an denen z. B. die Transportschlitten ohnehin angehalten werden, um beispielsweise eine Bearbeitung an den Produkten, ein Wechseln der Produkte oder Ähnliches, vorzunehmen.

Gerade beim Neuaufnehmen von Produkten auf den Transportschlitten werden dann auch die Sauger der Transportschlitten neu betätigt, wofür Unterdruck benötigt wird.

Bei der grundsätzlich anderen Lösung, also der permanenten Verbindung des Transportschlittens mit der Unterdruckleitung in der Führungsbahn, unabhängig von der Längsposition des Transportschlittens, kann, muss jedoch nicht unbedingt zusätzlich in dem Transportschlitten ein Unterdruckreservoir vorhanden sein, was jedoch durch die puffernde Wirkung zu bevorzugen ist.

Auch hierfür sind wiederum unterschiedliche Detaillösungen möglich:

Falls der Transportschlitten durch einen separaten, hier noch nicht beschriebenen Antrieb, beispielsweise mechanischer oder elektrischer Art, entlang der Führungsbahn bewegt wird, sind für die Unterdruckversorgung der Sauger in jedem Transportschlitten mindestens zwei in Längsrichtung beabstandete der zuvorbeschriebenen Anschlussöffnungen vorhanden, und entlang der Führungsbahn wiederum mehrere Zapföffnungen.

Durch entsprechende Beabstandung und Dimensionierung der Zapföffnungen einerseits und der Anschlussöffnungen andererseits kann erreicht werden, dass bei Bewegung des Transportschlittens entlang der Transportbahn der Schlitten ständig mit der Unterdruckleitung in der Transportbahn in Verbindung steht, wobei natürlich wiederum über eine Steuerung dafür gesorgt werden muss, dass nur diejenigen Zapföffnungen in der Transportbahn mit Unterdruck beaufschlagt sind, die momentan in Kontakt mit einer der Anschlussöffnungen eines Transportschlittens stehen.

Die permanente Verbindung kann etwa dadurch erreicht werden, dass entweder die Zapföffnungen und/oder die Anschlussöffnungen als in Längsrichtung verlaufende Schlitze ausgebildet sind, wobei der lichte Abstand zwischen zwei benachbarten Öffnungen geringer sein muss, als die Länge des im anderen Objekt vorhandenen Schlitzes.

Wenn die Zapföffnungen in der Führungsbahn als Schlitze ausgebildet sind, sind die Anschlussöffnungen in Transportschlitten soweit von dessen freien Enden zurückversetzt, dass in allen Relativlagen von gekoppelter Anschlussöffnung mit Zapfschlitz der Rest des Zapfschlitzes vom Transportschlitten noch dichtend abgedeckt wird.

Dabei muss nicht unbedingt eine vollständige Abdichtung erfolgen, jedoch sollte z. B. der Höhenabstand zwischen Transportschlitten und Führungsbahn und damit die offene Fuge zwischen Anschlussöffnung und Zapföffnung möglichst gering sein, um den Verlust an Unterdruck gering zu halten.

Ein vollständiges Anliegen von Transportschlitten und Führungsbahn aneinander, wenigstens um die gekoppelten Öffnungen herum, ist ebenfalls machbar, führt jedoch zu einem relativ hohen Verschleiß dieser abdichtenden Kante, da sich hierbei Schlitten und Führungsbahn relativ zueinander bewegen.

Ebenso sollten die lichten Abstände zwischen zwei benachbarten Zapfschlitzen kleiner sein als die Länge eines Zapfschlitzes zuzüglich des doppelten Durchmessers einer Anschlussöffnung, da hierdurch zuverlässig sichergestellt wird, dass die andere Anschlussöffnung mit dem nächsten Zapfschlitz in Verbindung tritt, bevor die erste Anschlussöffnung die Verbindung zum ersten Zapfschlitz verliert.

Sollten die Anschlussöffnungen in den Transportschlitten als Schlitze ausgebildet sein oder sowohl Anschlussöffnungen als auch Zapföffnungen als Schlitze ausgebildet sein, gilt dies analog.

Die Probleme der relativ zueinander bewegten und dabei gekoppelten Anschlussöffnungen und Zapföffnungen lassen sich vermeiden, wenn die Anschlussöffnungen im Transportschlitten relativ zum Transportschlitten in Längsrichtung beweglich ausgebildet sind, beispielsweise in einem Anschlussblock jeweils eine Anschlussöffnung aufgenommen ist und dieser Anschlussblock beweglich entlang des Transportschlittens in Längsrichtung verfahrbar und über eine flexible Unterdruckleitung mit den restlichen Unterdruckkomponenten des Transportschlittens verbunden ist.

Dadurch ist es möglich, dass die jeweilige, bewegliche Anschlussöffnung in Ruhe an der Zapföffnung verbleibt, solange sie mit dieser druckdicht verbunden ist, während sich demgegenüber der Transportschlitten entlang der Führungsbahn weiterbewegt.

Wegen der fehlenden Relativbewegung zwischen Anschlussöffnung und Zapföffnung, können diese beiden dann auch druckdicht miteinander verbunden werden, sei es durch eine mechanische Kupplung, oder noch besser in dem eine von beiden Öffnungen als Sauger ausgebildet ist bzw. einen Sauger umfasst, deren Saugrand sich um die Öffnung herum erstreckt.

Sind beispielsweise die Zapföffnungen in der Transportbahn als Sauger ausgestattet, können sie sich im aktivierten, d.h. mit Unterdruck beaufschlagten, Zustand an der glatten Unterseite des Transportschlitten um dessen Anschlussöffnung herum festsaugen, während im deaktivierten Zustand zwischen dem Saugrand und der Unterseite des Transportschlitten ein geringfügiger Abstand verbleibt, der Verschleiß vermeidet.

Ein weiterer Vorteil der beweglichen Anschlussöffnungen, von denen im folgenden immer nur die Anschlussblöcke - in denen sich die Anschlussöffnungen befinden, erwähnt werden, ohne die Erfindung hierauf zu beschränken - besteht darin, dass mittels der Relativbewegung der Anschlussblöcke zum restlichen Transportschlitten auch der Antrieb des Transportschlittens entlang der Führungsbahn realisiert werden kann, sodass hierfür dem Transportschlitten keine weitere Energieart als Antriebsenergie zugeführt werden muss.

Indem mittels Unterdruck die Relativbewegung zwischen dem momentan an der Führungsbahn fixierten Anschlussblock und einem festen Punkt am Transportschlitten oder einem anderen, momentan nicht fixierten, Anschlussblock bewirkt wird, wird dadurch indirekt auch der Transportschlitten entlang der Führungsbahn vorwärts bewegt, wofür natürlich eine entsprechende Steuerung vorhanden sein muss.

Zwar bewegt sich der Transportschlitten dabei prinzipiell schrittweise vorwärts, jedoch sind Lösungen möglich, die die einzelnen Schritte so aneinander anschließen, dass sich der Transportschlitten dabei durchaus gleichmäßig und mit konstanter Geschwindigkeit vorwärts bewegt, ohne dazwischen zwangsweise abzubremsen und neu zu beschleunigen.

Eine baulich einfache Lösung, bei der sich eine kontinuierliche Geschwindigkeit des Transportschlittens jedoch nur schwer realisieren lässt, besteht darin, dass in einem Transportschlitten zwei bewegliche Anschlussblöcke vorhanden sind, die vorzugsweise auf der gleichen Querposition angeordnet sind und zwischen denen ein Anschlussantrieb vorhanden ist, der den gegenseitigen Abstand der beiden Anschlussblöcke zwischen einem minimalen und einem maximalen Abstand wechselweise verändern kann.

Wenn dann auf der Führungsbahn die ebenfalls auf einer Spur liegenden Zapföffnung immer paarweise hintereinander liegen, wobei der Abstand innerhalb eines Paares von Zapföffnungen dem minimalen Abstand der Anschlussöffnungen entspricht und der Abstand zwischen den Paaren von Zapföffnungen dem maximalen Abstand der Anschlussöffnungen, schreitet der Transportschlitten durch abwechselnde Kopplung der vorderen und der hinteren Anschlussöffnung mit jeweils einer der Zapföffnungen entlang der Führungsbahn fort.

Durch Anordnung zwei solcher Einheiten nebeneinander in einem Transportschlitten und dementsprechend zwei Spuren von Zapföffnungen nebeneinander in der Führungsbahn, lässt sich auch eine kontinuierliche, gleichmäßige Vorwärtsbewegung des Transportschlittens erzielen.

Hierfür muss dann der Anschlussantrieb auch nicht mehr zwingend zwischen zwei Anschlussblöcken angeordnet werden, da auch eine Anordnung zwischen dem Anschlussblock und einem festen Punkt des Transportschlittens möglich ist.

Vorzugsweise sind dann jedoch drei bewegliche Anschlussblöcke und dementsprechend drei Spuren mit Zapföffnungen nebeneinander notwendig, um eine konstante Bewegung des Transportschlittens zu realisieren.

Der Anschlussantrieb, der damit gleichzeitig der Schlittenantrieb ist, kann mittels Unterdruck beispielsweise dadurch realisiert werden, dass er eine in Längsrichtung in Transportschlitten eingebauter Linearantrieb ist, bestehend aus einer pneumatischen Kolben-Zylinder-Einheit und einer parallel dazu angeordneten Druckfeder:

Ist der Arbeitsraum der Kolben-Zylinder-Einheit nicht mit Unterdruck beaufschlagt, sondern entlüftet, drückt die Druckfeder den Linearantrieb auf maximale Länge.

Wird der Arbeitsraum dagegen mittels Unterdruck beaufschlagt, versorgt vom Unterdrucksystem des Transportschlittens und damit letztendlich aus der Unterdruckleitung in der Führungsbahn, so saugt diese den Kolben entgegen der Kraft der Druckfeder in den Zylinder und stellt den Linearantrieb auf minimale Länge ein.

Um dies zu erreichen, kann beispielsweise die den Arbeitsraum versorgende Unterdruckleitung über ein einfaches Drei-Wege-Ventil mit dem Arbeitsraum der Kolben-Zylinder-Einheit des Antriebes verbunden sein, welches den Arbeitsraum wahlweise entweder mit der Unterdruckleitung oder mit einem Belüftungsausgang verbindet.

Wenn an der Transportvorrichtung mehrere Führungsbahnen, z. B. für die Vorwärts- und Rückwärtsrichtung etc. vorhanden sind, sind Zapföffnungen entweder nur entlang derjenigen Führungsbahn vorhanden, auf denen die Transportschlitten beladen mit Produkten bewegt werden sollen oder - falls sich dies von Anwendung zu Anwendung ändern kann - die Steuerung ist in der Lage, diejenigen Zapföffnungen, die in der momentan für leere Transportschlitten benutzten Führungsbahnen liegen, immer geschlossen zu halten.

### c) Ausführungsbeispiele

Ausführungsformen gemäß der Erfindung sind im Folgenden beispielhaft näher beschrieben. Es zeigen:
- Fig. 1:: Eine Transportvorrichtung, im Ganzen,
- Fig. 2:: eine erste Variante der Unterdruckversorgung,
- Fig. 3:: eine zweite Variante der Unterdruckversorgung,
- Fig. 4:: eine Variante mit zusätzlichem Schlitten-Antrieb,
- Fig. 5:: eine weitere Variante mit Schlitten-Antrieb, und
- Fig. 6:: eine Detaildarstellung des Antriebes.

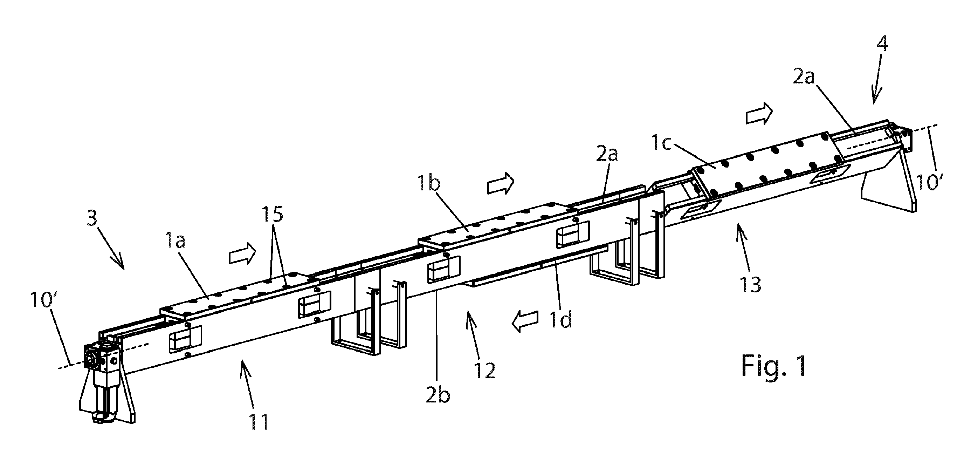

Bei der Transportvorrichtung der Figur 1 werden Transportschlitten 1a, b, c..., auf denen in der Praxis auf der Oberfläche befindlichen Sauger 15 ein oder mehrere Produkte 50 gehalten werden -entlang der Transportstrecke von deren Anfang 3 zu deren Ende 4 bewegt, mit einem oder mehreren definierten Zwischenstopps an bestimmten Bearbeitungsstationen oder auch mit einer definierten Geschwindigkeit auf Teilstrecken oder auf der gesamten Strecke.

Dabei werden die einzelnen Schlitten 1a, b, c separat und unabhängig entlang der Transportbahn 2a bewegt, die sich auf der Oberseite der Bahnkörper 11, 12, 13 befindet, wie in den Figuren 1a und 1b dargestellt.

Sobald ein Transportschlitten 1c auf dem Endmodul 13 des Bahnkörpers angekommen ist, an der üblicherweise das Produkt 50 wieder von dem Transportschlitten 1c entfernt wird, muss der leere Transportschlitten 1c wieder zum Anfang 3 der Transportstrecke zurücktransportiert werden, und zwar ohne die nächsten, auf der oberen Transportbahn 2a mit Produkten 50 beladen herannahenden Transportschlitten 1b, 1a... zu behindern.

Um dies zu erreichen, befindet sich auf den Bahnkörpern 11, 12, 13 sowohl auf der Oberseite eine Transportbahn 2a als auch auf der gegenüberliegenden Unterseite eine analoge Transportbahn 2b.

Das Endmodul 13 kann um seine Längsachse 10' um wenigstens 180° gedreht werden, so dass der soeben auf der oberen Transportbahn 2a entleerte Transportschlitten z. B. 1c durch diese Drehung nach unten gedreht und in fluchtende Lage mit der unteren Transportbahn 2b des anschließenden mittleren Moduls 12 des Bahnkörpers gebracht wird. Diese Drehung hat in Figur 1 gerade begonnen.

Nach Vollendung dieser 180°-Drehung kann der Schlitten 1c in Figur 1 dann auf der unteren Transportbahn 2b für die Rückwärtsbewegung zum Ende 3 bewegt werden, wie in Figur 1 anhand des Transportschlittens 1d ersichtlich.

Daraus wird klar, dass die Schlitten gegen ein Abheben von der Transportbahn 2a, b gesichert sein müssen, beispielsweise durch formschlüssigen Hintergriff.

Sobald auf der unteren Transportbahn 2b ein Transportschlitten, z. B. der Schlitten 1d, das Ende 3 erreicht hat, also sich an der Unterseite des Anfangsmoduls 11 befindet, wird zunächst abgewartet, bis der eventuell noch auf der oberen Führungsbahn 2a dieses Anfangsmoduls 11 vorhandene Transportschlitten 1a, in der Regel mit Objekten beladen, dieses Anfangsmodul 11 in Richtung mittleres Modul verlassen hat, also die obere Führungsbahn 2a leer ist.

Dann wird dieses Anfangsmodul 11 mit dem an der Unterseite befindlichen Schlitten z. B. 1d ebenfalls um 180° gedreht, sodass der angekommene leere Schlitten 1d sich dann auf der Oberseite des Anfangsmoduls 11 und fluchtend mit der oberen Führungsbahn 2a des angrenzenden Mittelmodule der Startposition, in der Regel der Beladeposition, befindet.

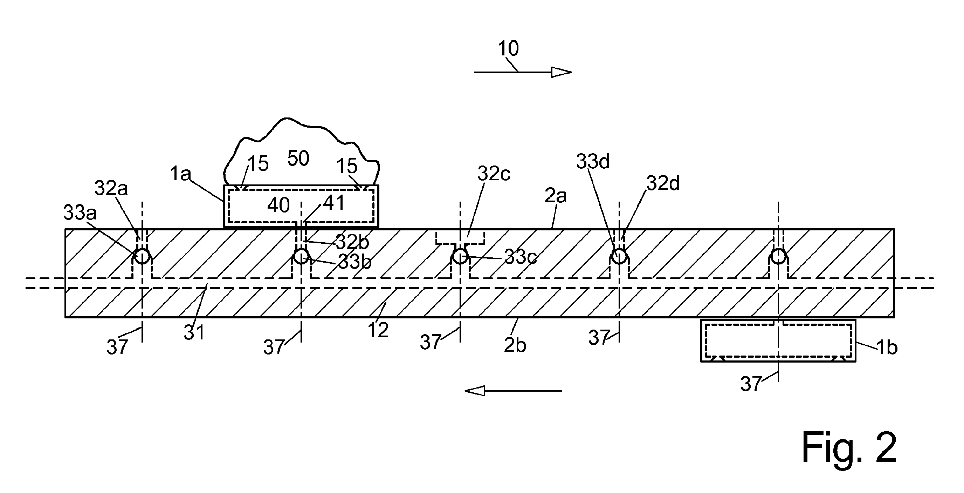

In den Figuren 2 und folgende sind Möglichkeiten zur Unterdruckversorgung der entlang der Führungsbahnen 2a, b bewegten Transportschlitten 1a, b dargestellt, die diese primär für das Betreiben der in der Oberseite der Transportschlitten 1a, b angeordneten Sauger 15 benötigen, mit deren Hilfe die zu transportierenden Produkte 50 auf den Transportschlitten 1a, b gehalten werden.

Die Unterdruckversorgung erfolgt dabei jeweils von einer Unterdruckleitung 31 aus, die in dem Bahnkörper 11, 12, 13, welcher die Führungsbahnen 2a, b trägt, verläuft und in Längsrichtung 10 beabstandet mehrere Zapföffnungen 32a, b... entlang der Führungsbahn 2a, b aufweist, die jeweils über ein Sperrventil 33a, b... mit der Unterdruckleitung 31 verbunden sind.

Eine nicht dargestellte Steuerung ist mit unter anderem allen Sperrventilen 33a, b verbunden und öffnet nur diejenigen Sperrventile 33a, b, die momentan mit einer Anschlussöffnung 41 bzw. 41 a, b in der Unterseite eines Transportschlittens 1a, b verbunden sind.

Von dieser Anschlussöffnung 41 bzw. 41 a, b sind über schlitteninterne Unterdruckleitungen 31' die einzelnen Sauger 15 des Transportschlittens 1a, b verbunden sowie gegebenenfalls vorhandene weitere mittels Unterdruck betriebene Komponenten.

Figur 2 zeigt eine erste Variante der Unterdruckversorgung, bei der in dem dargestellten Transportschlitten 1a, b ein Unterdruckreservoir 40 vorhanden ist, welches sowohl mit der Anschlussöffnung 41 über ein nicht dargestelltes Sperrventil 33' als auch mit den Saugern 15 in Verbindung steht.

Selbstverständlich ist jedem Sauger 15 ebenfalls ein - nicht dargestelltes - Sperrventil zugeordnet, um die Sauger nur dann gesteuert mit Unterdruck zu versorgen, wenn ein Produkt an diesem Sauger gehalten werden soll.

Gemäß Figur 2 sind vorzugsweise die Zapföffnungen 32a, b... in der Führungsbahn 2a von der Querschnittsfläche passend zu der Anschlussöffnung 41 ausgebildet. Sie können jedoch auch - wie an der Zapföffnung 32c dargestellt - als in Längsrichtung 10 verlängerter Schlitz ausgeführt sein, um den Transportschlitten 1a, b in Längsrichtung nicht all zu exakt mit seiner Anschlussöffnung 41 über der Zapföffnung 32c positionieren zu müssen.

Die Zapföffnungen 32a... sind zum einen nahe am Anfang und Ende der dargestellten Führungsbahn 2a dargestellt, also an den Stellen, den die Anschlussöffnung des Transportschlittens 1a einnimmt, wenn er sich ganz am Anfang oder am Ende der Transportbahn 2a befindet.

Stattdessen und/oder zusätzlich können weitere Zapföffnungen 32b, c... dazwischen vorzugsweise an den Haltepositionen 37 angeordnet sein, an denen der Transportschlitten 1a ohnehin anhalten müsste, um Produkte 50 auf- oder abzuladen, Bearbeitungen an den auf dem Transportschlitten 1a gehaltenen Produkt 50 durchführen zu lassen oder ähnliches.

Wie Figur 2 zeigt, werden nur die auf der Führungsbahn 2a, die sich auf der Oberseite des Bahnkörpers 12 befindet, laufende Transportschlitten 1a... mit einem oder mehreren darauf gehaltenen Produkt 50 beladen und bewegt - hier von links nach recht - während die Rückbewegung der leeren Transportschlitten 1 b... auf der Führungsbahn 2b an der Unterseite des Bahnkörpers 12 stattfindet.

Da auf dieser Rückführbahn 2b keine Produkte 50 transportiert werden, weist die Unterdruckleitung 31 im Bahnkörper 12 auch keine Zapföffnungen zu dieser unteren Führungsbahn 2b hin auf.

Im Folgenden ist aus dem gleichen Grund immer nur die Versorgung der auf der Oberseite des Bahnkörpers 12 angeordneten Führungsbahn 2a mit Unterdruck dargestellt, obwohl es Anwendungen geben kann, bei denen Produkte auf weiteren Führungsbahnen, auch einer nach unten hängenden Führungsbahn 2b, hängend am Transportschlitten bewegt werden.

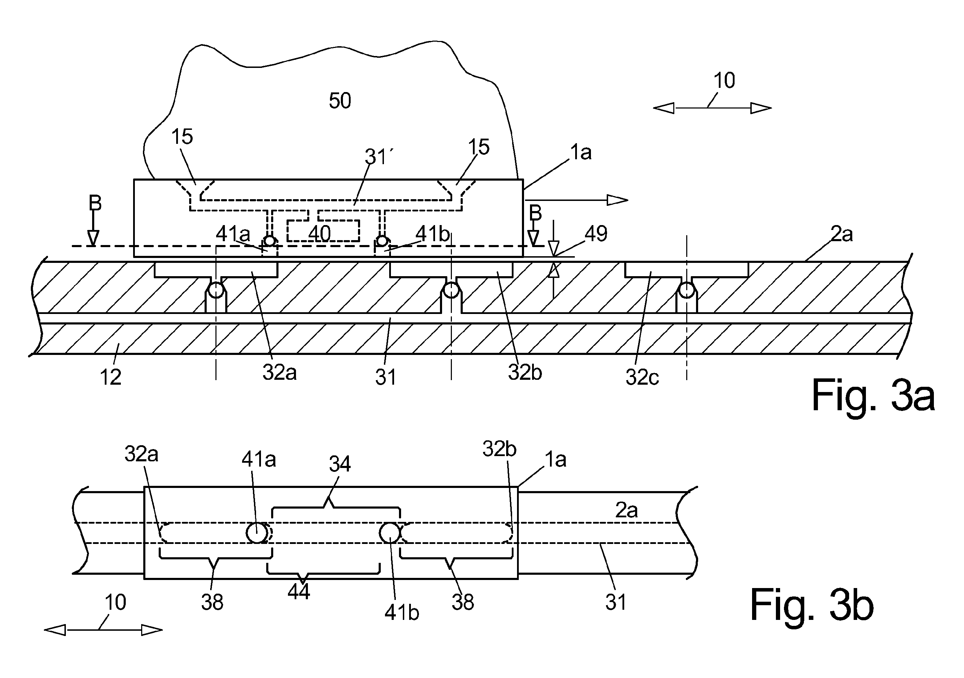

Während somit in Figur 2 der Transportschlitten 1a auf den Distanzen zwischen den Zapföffnungen 32a, b... nicht mit Unterdruck aus der Leitung 31 versorgt wird, sondern ihm nur der Unterdruck des eigenen Unterdruck-Reservoirs 40 zur Verfügung steht, welches an den einzelnen Zapföffnungen 32a, b... sozusagen nachgeladen wird, steht der Transportschlitten 1a bei den Lösungen der Figuren 3 bis 5 ständig mit der Unterdruckleitung 31 in Verbindung.

So zeigt Figur 3 eine Lösung in der Seitenansicht sowie in der Aufsicht, die sich von derjenigen der Figur 2 dadurch unterscheidet, dass in ihrem Transportschlitten 1a... zwei in Längsrichtung 10 beabstandete Anschlussöffnungen 41 a, b in der Unterseite des Transportschlittens 1a... angeordnet sind und zwar in Längsrichtung 10, also der Verlaufsrichtung der Führungsbahn 2a, b... beabstandet und - wie die Aufsicht der Figur 3b zeigt - auf der gleichen Querposition.

Die Anschlussöffnungen 41 a, b stehen innerhalb des Transportschlitten 1a... über eine interne Unterdruckleitung 31' sowohl miteinander als auch mit allen Saugern 15 dessen Schlittens in Verbindung. Zusätzlich kann vorzugsweise mit diesem Unterdrucksystem auch ein Unterdruckreservoir im Transportschlitten 1a... verbunden sein, welches bei dieser Lösung primär die Funktion eines Unterdruck-Puffers übernimmt.

Die permanente Verbindung des Unterdrucksystems im Transportschlitten 1a mit der Unterdruckleitung 31 wird durch die entsprechende Anordnung und Dimensionierung der Anschlussöffnungen 41 a, b sowie der Zapföffnungen 32a, b... erreicht.

Im vorliegenden Fall sind die Zapföffnungen als Zapfschlitze 32a, b... ausgebildet, deren Haupterstreckungsrichtung in Längsrichtung 10 ist und die in Querrichtung jeweils auf der gleichen Querposition der Führungsbahn 2a liegend.

Die Abstände 34 zwischen den Zapfschlitzen 32a, b... sind alle gleich lang und ebenso ist die Länge der einzelnen Zapfschlitze 32a, b... ebenfalls jeweils gleich lang.

Der lichte Abstand 44 zwischen den beiden Anschlussöffnungen 41 a, b des Transportschlittens 1a... ist dabei geringer als die Länge 38 eines Zapfschlitzes 32a, b, und weiterhin ist der Abstand 34 zwischen zwei aufeinander folgenden Zapfschlitzen 32a, b kleiner als die Summe aus der Länge eines Zapfschlitzes 32a... plus die in Längsrichtung 10 gemessenen Durchmesser der beiden Anschlussöffnungen 41 a, b, die vorzugsweise gleich gestaltet und gleich groß sind, insbesondere einen runden Querschnitt besitzen.

Dadurch wird sichergestellt, dass z. B. bei einer Bewegung des Transportschlittens 1 a... von der dargestellten Lage weiter nach rechts, die rechte Anschlussöffnung 41 b in Verbindung mit dem Zapfschlitz 32b gelangt, bevor die linke Anschlussöffnung 41 a vollständig außer Kontakt mit dem Zapfschlitz 32a gerät.

In der Höhe, also quer zur Ebene der jeweiligen Führungsbahn 2a..., laufen zwar die Transportschlitten 1a, b in der Regel kontaktierend, beispielsweise mittels Rollen auf der Führungsbahn 2a..., jedoch besteht zwischen der Anschlussöffnung 41 a, b und den Zapfschlitzen 32a, b ein geringfügiger Höhenabstand 49 um keinen Reibungsverschleiß an deren Kontaktflächen zum jeweils anderen Element hin aufgrund der Relativbewegung des Transportschlittens 1a zur Führungsbahn 2a auftreten zu lassen.

Der dadurch eintretende Verlust an Unterdruck wird minimiert, indem dieser Höhenabstand 49 so gering wie möglich gehalten wird und sich im Bereich von wenigen Zehntel oder gar Hundertstel Millimetern befindet.

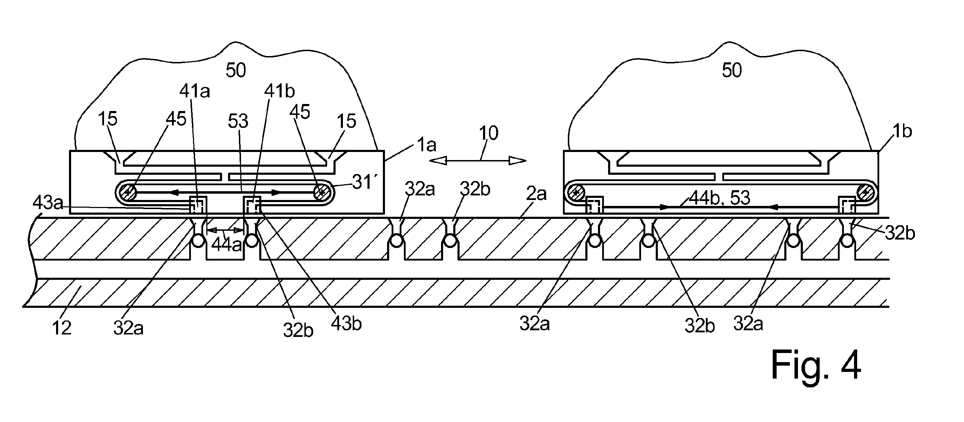

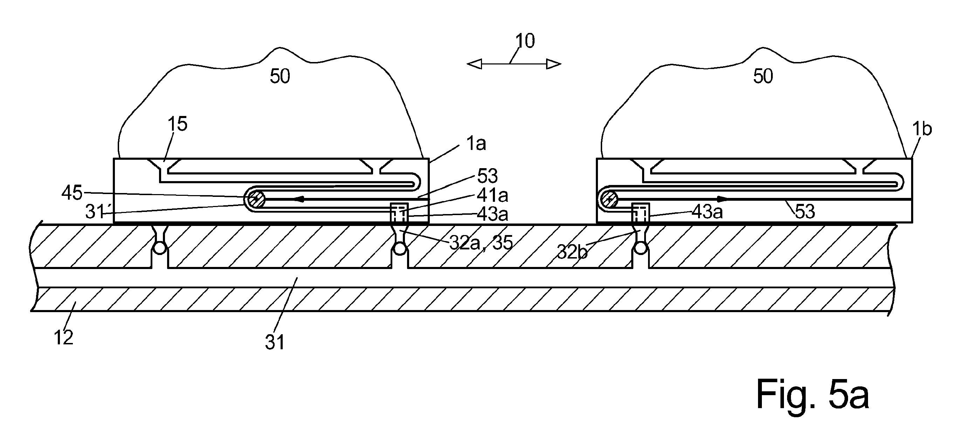

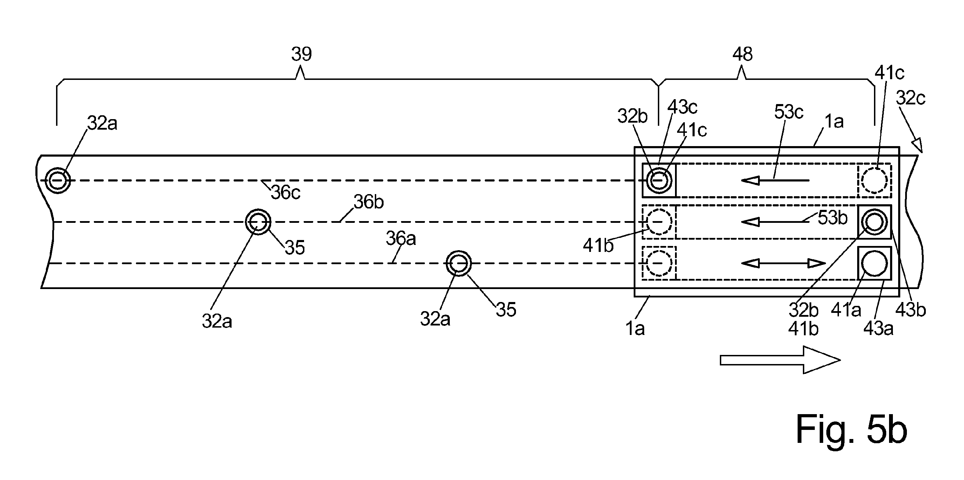

Die Figuren 4 und 5 zeigen Lösungen, bei denen die Transportschlitten 1a, b ebenfalls in permanentem Kontakt mit der Unterdruckleitung 31 im Bahnkörper 12 stehen können, also unabhängig von ihrem Bewegungszustand und ihrer Längsposition entlang der Führungsbahn z. B. 2a, wobei jedoch die Anschlussöffnungen 41 a, b im Transportschlitten 1 über jeweils begrenzte Zeitabschnitte über den jeweiligen Zapföffnungen 32a, b still stehen, obwohl sich dabei der betreffende Transportschlitten 1a... weiter entlang der Transportbahn 2a... bewegt.

Zu diesem Zweck ist jede einzelne Anschlussöffnung 41 a, b in einem eigenen Anschlussblock 43a, b angeordnet, der im unteren Bereich des Transportschlittens 1a in Längsrichtung 10 bewegbar ist und dessen Unterseite vorzugsweise mit der Unterseite des restlichen Transportschlittens 1a... fluchtet.

Bei der Lösung der Figur 4 sind die beiden Anschlussblöcke 34a, b auf der gleichen Querposition angeordnet und können daher zwischen dem jeweiligen vorderen und hinteren Ende des Transportschlittens 1a... und dessen Mitte - in Seitenansicht betrachtet - hin und her verfahren werden, also zwischen einem maximalen Längsabstand 44b, wie in Figur 4 am rechten Schlitten 1 b dargestellt und einem minimalen Längsabstand 44a, wie am linken Transportschlitten 1a dargestellt.

Die Zapföffnungen 32a, b entlang der Führungsbahn 2a sind jeweils paarweise hintereinander in Längsrichtung 10 angeordnet, wobei der Abstand innerhalb eines Paare 32a, b von Zapföffnungen dem Abstand der Anschlussöffnungen 41 a, b bei minimalem Längsabstand 44a entspricht.

Dagegen ist der Abstand von einem Paar Zapföffnungen 32a, b zum nächsten paar so bemessen, dass die hintere Zapföffnung 32a des hinteren Paares zur vorderen Zapföffnung 32b des nächsten vorderen Paares dem Abstand der Anschlussöffnungen 41 a, b bei maximalem Längsabstand 44b entspricht.

Dadurch kann eine schrittweise Vorwärtsbewegung des Transportschlittens 1a, b bewirkt werden.

Da in der dargestellten Position des Transportschlittens 1a die hintere Anschlussöffnung 41 a mit der hinteren Zapföffnung 32 gekoppelt bleibt und gleichzeitig der Längsabstand zwischen den Anschlussblöcken 43a, b, also den Anschlussöffnungen 41 a, b, mittels eines Linearantriebes 53 vergrößert wird, verfährt dadurch der Transportschlitten 1a immer weiter nach rechts entlang der Führungsbahn 2a, bis- bei maximalem Längsabstand 44b zwischen den Anschlussblöcken 43a, b - die Anschlussöffnung 41 b über der Zapföffnung 32b des nächsten Paares von Zapföffnungen liegt und mit dieser gekoppelt werden kann, was dem momentan am Transportschlitten 1 b dargestellten Zustand entspricht.

Wenn von diesem Zustand aus die vordere, also in Bewegung des Schlittens nach rechts, rechte Anschlussöffnung 41 b mit der darunter befindlichen Zapföffnung 32b gekoppelt bleibt und der Längsabstand vom maximalen Zustand 44b aus zwischen den beiden Anschlussblöcken 43a, b mittels Linearantrieb verringert wird und sich dabei nunmehr die Anschlussöffnung 41 a von der Zapföffnung 32a löst, verfährt dadurch wiederum der Transportschlitten 1 b weiter nach rechts, bis der Ausgangszustand wieder erreicht ist.

Auf diese Art und Weise kann zusätzlich die gewünschte Transportbewegung des Transportschlittens 1a, b entlang der Führungsbahn 2a, b realisiert werden.

Es muss also dem Transportschlitten 1a, b keine weitere Energieart wie etwa elektrische Energie für die Realisierung der Transportbewegung zugeführt werden.

Dies bedeutet natürlich im Umkehrschluss, dass sämtliche am Bahnkörper vorhandenen Führungsbahnen 2a, b... mit Zapföffnungen 32a, b ausgestattet sein müssen, auch wenn auf der entsprechenden Führungsbahn lediglich eine leere Rückbewegung der Transportschlitten 1a, b, also ohne Produkte 50, stattfinden soll.

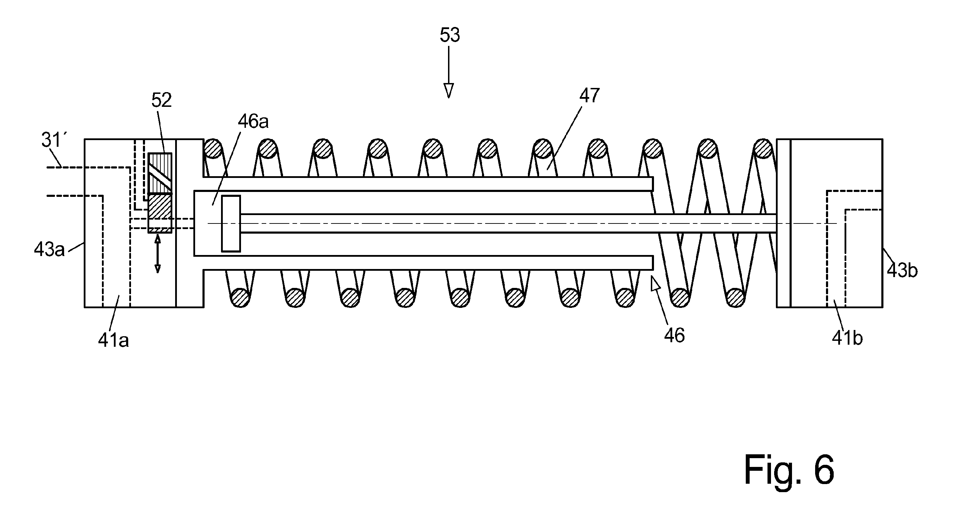

In Figur 6 ist ein Linearantrieb 53 beschrieben, der die abwechselnde Vergrößerung und Verkleinerung des Längsabstandes von 44a auf 44b und zurück mittels Unterdruck realisiert.

Ein solcher Linearantrieb 53 ist in dem Transportschlitten 1 b direkt zwischen den Anschlussblöcken 43a, b eingezeichnet, kann jedoch auch - wie am Transportschlitten 1a dargestellt - zwischen den beiden Umlenkrollen 45 angeordnet sein, über welche die flexible Unterdruckleitung 31', die zu jedem Anschlussblock 43a, b führt, umgelenkt wird.

Während es bei der Lösung der Figur 4 schwierig ist, eine konstante Fahrgeschwindigkeit des Transportschlittens 1a... zu erreichen, da bei Umkehrung von Vergrößerung auf Verkleinerung des Längsabstandes und umgekehrt jeweils kurzfristig ein Stillstand des Transportschlittens 1a... eintritt, kann dies bei der Antriebslösung der Figur 5 vermieden werden.

In Figur 5a ist in der Seitenansicht im Unterschied zu Figur 4 dargestellt, wie der dort sichtbare Anschlussblock 43a mit der darin aufgenommenen Anschlussöffnung 41 a wiederum mittels eines Linearantriebes 53 diesmal zwischen einem bezüglich des Transportschlittens 1a, b festen Punkt entlang des Transportschlittens 1a, b in Längsrichtung 10 hin- und herverfahren wird, z. B. indem sich der Linearantrieb 53 mit seinem anderen Ende nicht direkt an dem Anschlussblock 43 befindet, sondern wiederum an der Umlenkrolle 45 für die als flexible Schlauchleitung ausgeführte Unterdruckleitung 31' zwischen dem Anschlussblock 43a und dem festen Teil des Unterdrucksystems in dem Transportschlitten 1a, b, wobei sich die Umlenkrolle 45 wiederum auf der Innenseite der durch diese Schlauchleitung in der Querrichtung betrachteten Schlaufe befindet.

Auf diese Art und Weise kann der Anschlussblock 43a nicht nur wie bei Figur 4 etwa über die halbe Länge des Transportschlittens 1a, b verfahren werden, sondern über annähernd dessen gesamte Länge.

Auch in diesem Fall kann - wenn die Anschlussöffnung 41 a mit der Zapföffnung 32a verbunden bleibt - der Schlitten 1a nach rechts verlagert werden durch Ausfahren des Linearantriebes 53 von der dargestellten minimalen Länge auf seine maximale Länge, woraufhin dann der Anschlussblock 43a sich nahe des linken Endes des Transportschlittens 1a gekoppelt an eine andere Zapföffnung 32b befindet, wie momentan am Beispiel des Transportschlittens 1b im rechten Bild ersichtlich.

Um jedoch eine kontinuierliche Vorwärtsbewegung des Transportschlittens 1a zu erreichen, sind - wie in der Aufsicht der Figur 5b dargestellt - in dem Transportschlitten 1a... nebeneinander mehrere längsbewegliche Anschlussblöcke 43a, b, c angeordnet, jeweils ausgestattet mit einem eigenen Linearantrieb 53a, b, c und entsprechend dem Abstand der Anschlussöffnungen 41 a, b, c sind die auch Zapföffnungen 32a, b, c... jeweils auf drei im entsprechenden Abstand nebeneinander liegenden Zapfspuren 36a, b, c angeordnet.

Wie Figur 5b zeigt, sind die Zapföffnungen 32a, b, c auf einer Spur zueinander jeweils gleich beabstandet, von einer Spur zur anderen jedoch jeweils um ein Drittel dieses Schrittabstandes 39 versetzt.

Wenn der Schrittabstand 39 dabei nicht größer ist als die Längendifferenz 48 zwischen den beiden Endpositionen eines Anschlussblockes 43a... innerhalb des Transportschlittens 1a... multipliziert mit der Anzahl nebeneinander liegender Anschlussblöcke 43a, b, c, kann auf folgende Art und Weise dadurch eine kontinuierliche Vorwärtsbewegung des Transportschlittens 1a... erzielt werden.

Momentan befinden sich gemäß Figur 5b die Anschlussblöcke 43a, b, c in den mit durchgezogenen Linien dargestellten Positionen, also linken bzw. rechten Endlagen.

Dabei war bis jetzt der Anschlussblock 43c mit seiner Anschlussöffnung 41 c stillgestanden gegenüber und verbunden mit der darunter befindlichen Zapföffnung 32b auf der entsprechenden Zapfspur 36c und der auf dieser Spur angeordnete Linearantrieb 53c hatte den Anschlussblock 43c innerhalb des Schlittens 1a zunehmend nach links bewegt.

Noch bevor dieser Anschlussblock 43c seine linke Endlage im Transportschlitten 1a erreicht hat und seine Anschlussöffnung 41 c von der Zapföffnung 32b gelöst wird, kommt die Anschlussöffnung 41 b des Anschlussblockes 43b in Kontakt mit der nächsten Zapföffnung 32b auf einer anderen Zapfspur 36b, koppelt an dieser an und der zugeordnete Linearantrieb 53b beginnt bereits diesen Anschlussblock 43b von der rechten Endlage im Transportschlitten 1a aus in Richtung linke Endlage zu bewegen.

Kurz bevor er diese seine linke Endlage erreicht hat, wird mit dem nächsten Anschlussblock 43a und dem der darin enthaltenden Anschlussöffnung 41 a im Wechselspiel analog das Gleiche ablaufen usw., wodurch der Transportschlitten auch kontinuierlich nach rechts bewegt werden kann.

Auf diese Art und Weise ist ersichtlich, dass bereits mit zwei Anschlussblöcken 43a, b und zugeordneten Linearantrieben 53a, b, besser jedoch mit mindestens drei und entsprechender Steuerung, eine Bewegung des Transportschlittens 1a, b... mit konstanter oder auch jeder anderen gesteuerten Geschwindigkeit erzielt werden kann.

Um die Vorwärtsbewegung des Transportschlittens mittels des gleichen Unterdruckes realisieren zu können, mit dem auch die Sauger 15 von der Unterdruckleitung 31 im Bahnkörper 12 aus versorgt werden, kann beispielsweise die in Figur 6 dargestellte Bauform eines Linearantriebes 53 gewählt werden:

Der Linearantrieb 53 besteht aus einer Kolben-Zylinder-Einheit 46, sowie einer Druckfeder 47, die als helixförmige, zylindrische Feder um die Kolben-Zylinder-Einheit 46 herum angeordnet ist und sich einerseits am Boden des Zylinders und andererseits am freien Ende der Kolbenstange mittels dort angeordneter, radial vorstehender Stirnplatten abstützt.

Diese Stirnplatten können beispielsweise unmittelbar an den entsprechenden Stirnflächen der Anschlussblöcke 43 a oder b anliegen.

Der Arbeitsraum 46a im Zylinder zwischen Zylinderboden und dem Kolben ist über ein Drei-Wege-Ventil 52 wahlweise entweder mit der Unterdruckleitung 31' und damit der zugeordneten Anschlussöffnung 41 a, b.... verbunden oder mit einem Belüftungsausgang 51.

Ist der Arbeitsraum 46a somit belüftet, stellt die Druckfeder 47 die maximale Länge des Linearantriebes her. Wird der Arbeitsraum 46a dagegen über die Unterdruckleitung 31' leer gesaugt, wobei der Belüftungsausgang 51 durch das Drei-Wege-Ventil 52 verschlossen wird, wird der Kolben bis zum Boden des Zylinders angesaugt und der Linearantrieb 53 auf minimale Länge eingefahren.

Durch eine entsprechende Steuerung des Drei-Wege-Ventiles 52 über vorzugsweise die gleiche Steuerung, die auch die Unterdruckversorgung der Transportschlitten 1a, b steuert, kann damit auch die Vorwärtsbewegung der Schlitten gesteuert werden.

Ein weiterer Vorteil der Lösungen der Figuren 4 und 5 liegt daran, dass bei einer hergestellten Unterdruckverbindung zwischen einer Anschlussöffnung 41 a... und einer Zapföffnung 32a..., diese beiden Öffnungen über eine begrenzte Zeitspanne in Ruhe zueinander verbleiben.

Dadurch ist es möglich, diese auch dicht miteinander zu verbinden und keinen Unterdruckverlust hinnehmen zu müssen, indem beispielsweise eine von beiden Öffnungen, etwa die Zapföffnungen 32a... als Sauger 35 ausgebildet sind, die sich um die Anschlussöffnung 41a... herum an der glatten Unterseite des kann und wobei sich die Zapföffnung 32a... ebenfalls innerhalb des umgebenden, ringförmig geschlossenen Saugrandes 35a dieses Saugers 35 befindet.

Sobald die Unterdruckbeaufschlagung dieser Zapföffnung 32a beendet wird, haftet der entsprechende Sauger 35 dieser Zapföffnung 32a, b - wie in den Figuren dargestellt - nicht mehr an der Unterseite des Transportschlittens 1a.... und nimmt demgegenüber einen geringen Höhenabstand ein, ohne dass die Höhe des Transportschlittens 1a, b über der Führungsbahn 2a, b verändert werden muss.

### BEZUGSZEICHENLISTE

- 1 a, b: Transportschlitten
- 2a, b: Führungsbahn
- 3: Anfang
- 4: Ende
- 10: Längsrichtung
- 10': Längsachse
- 11: Bahnkörper; Anfangsmodul
- 12: Bahnkörper; mittleres Modul
- 13: Bahnkörper; Endmodul
- 15: Sauger
- 31: Unterdruckleitung
- 31': Unterdruckleitung
- 32a,b: Zapföffnung, Zapfschlitz
- 33', 33a,b: Sperrventil
- 34: Abstand
- 35: Sauger
- 35a: Saugrand
- 36a,b: Zapfspur
- 37a, b: Halteposition
- 38: Länge
- 39: Schnittabstand
- 40: Unterdruckreservoir
- 41 a,b: Anschlussöffnung
- 42: Anschlussantrieb
- 43a,b: Anschlussblock
- 44: Längsabstand
- 44a: minimaler Längsabstand
- 44b: maximaler Längsabstand
- 45: Umlenkrolle
- 46: Kolben-Zylinder-Einheit
- 46a: Arbeitsraum
- 47: Druckfeder
- 48: Längendifferenz
- 49: Höhenabstand
- 50: Produkt
- 51: Belüftungsausgang
- 52: 3-Wege-Ventil
- 53: Linearantrieb

## Patentansprüche

1. Transportvorrichtung mit mehreren, entlang einer Führungsbahn (2a, b) verfahrbaren Transportschlitten (1a, b...), die mit Unterdruck beaufschlagt sind, insbesondere für die Sauger (15) als Halteelemente für Produkte (50) am Transportschlitten (1a, b),
**dadurch gekennzeichnet, dass**
- jeder Transportschlitten (1a, b...) ein Unterdruck-Reservoir (40) aufweist, das insbesondere mit den Saugern (15) über eine Unterdruckleitung (31') in Verbindung steht, sowie wenigstens eine Anschlussöffnung (41) für Unterdruck und
- an definierten Längspositionen der Führungsbahn (2a,b) Zapföffnungen (32a,b...) angeordnet sind, die über jeweils ein Sperrventil (33a,b) mit einer Unterdruckleitung (31) verbindbar sind und so ausgebildet und angeordnet sind, dass sie mit der wenigstens einen Anschlussöffnung (41) des Transportschlittens (1a,b) koppelbar sind, und
- eine Steuerung (18) vorhanden ist, die dafür sorgt, dass nur diejenigen Zapföffnungen (32a, b..) durch Öffnen ihrer Sperrventile (33a, b...) mit Unterdruck beaufschlagt sind, die momentan verbunden mit einer Anschlussöffnung (41) des Transportschlittens (1a,b) sind.

2. Transportvorrichtung nach Anspruch 1,
**dadurch gekennzeichnet, dass**
- die Zapföffnungen (32a, b) am Anfang und Ende der Führungsbahn (2a, b) angeordnet sind und / oder
- die Zapföffnungen (32a, b...) an den Haltepositionen (37a, b) der Transportbahn (2a, b), insbesondere den Bearbeitungspositionen, angeordnet sind.

3. Transportvorrichtung nach einem der vorhergehenden Ansprüche,
**dadurch gekennzeichnet, dass**
die Zapföffnungen (32a,b) an denjenigen Positionen angeordnet sind, an denen die Sauger (15) des Transportschlittens (1a,b) neu betätigt werden müssen, insbesondere zum Fixieren eines neuen Produktes (50).

4. Transportvorrichtung mit mehreren, entlang einer Führungsbahn (2a, b) verfahrbaren Transportschlitten (1a, b...), die mit Unterdruck beaufschlagt sind, insbesondere für die Sauger (15) als Halteelemente für Produkte (50) am Transportschlitten (1a, b), insbesondere nach Anspruch 1,
**dadurch gekennzeichnet, dass**
- entlang der Führungsbahn (2a, b...) eine Unterdruckleitung (31) verläuft, in der, in Längsrichtung (10) entlang der Führungsbahn (2a,b) zueinander beabstandete Zapföffnungen (32a, b...) angeordnet sind, die über jeweils ein Sperrventil (33a, b...) mit einer Unterdruckleitung (31) verbindbar sind,
- jeder Transportschlitten (1a, b..) in Längsrichtung (10) beabstandet mindestens zwei Anschlussöffnungen (41a, b...) für Unterdruck aufweist, die mit den Saugern (15) über eine Unterdruckleitung (31') verbunden sind, die mit den Zapföffnungen (32a, b...) so fluchten, dass jeweils mindestens eine Anschlussöffnung (41a, b...) immer mit einer der Zapföffnungen (32a, b...) in Verbindung steht, und
- eine Steuerung (18) vorhanden ist, die dafür sorgt, dass nur diejenigen Zapföffnungen (32a, b...) durch Öffnen ihrer Sperrventile (33a, b...) mit Unterdruck beaufschlagt sind, die momentan verbunden mit einer der Anschlussöffnungen (41a, b...) des Transportschlittens (1a,b) sind.

5. Transportvorrichtung nach einem der vorhergehenden Ansprüche,
**dadurch gekennzeichnet, dass**
- wenigstens eine Art von Öffnungen, die Zapföffnungen (32a,b) und/oder die Anschlussöffnungen (41a,b,...), als Schlitze ausgebildet sind, die in Längsrichtung (10) beabstandet angeordnet sind, und
- die Abstände der Schlitze einerseits und Öffnungen andererseits so gewählt sind, dass unabhängig von der Relativlage des Transportschlittens (1a,b) entlang der Führungsbahn (2a,b) jeweils mindestens ein Schlitz bzw. Öffnung des Transportschlittens (1a,b) mit wenigstens einem Schlitz bzw. Öffnung der Führungsbahn (2a,b) in Kontakt steht.

6. Transportvorrichtung nach Anspruch 5,
**dadurch gekennzeichnet, dass**
- die Zapföffnungen (32a,b) in der Führungsbahn (2a,b) als Zapfschlitze (32a,b) ausgebildet sind, und
- die Anschlussöffnungen (41 a, b) soweit von den freien Enden des Transportschlittens (1a, b) zurückversetzt sind, dass der Rest des momentan mit einer Anschlussöffnung (41a, b...) in Kontakt stehenden Zapföffnung (32a, b) vom Transportschlitten (1a, b...) dicht abgedeckt wird.

7. Transportvorrichtung nach Anspruch 6,
**dadurch gekennzeichnet, dass**
- der lichte Längsabstand (44) zwischen zwei benachbarten Anschlussöffnungen (41 a,b...) des Transportschlittens (1a,b) geringer ist als die Länge (38) eines Zapfschlitzes (32a,b), und der Transportschlitten (1a,b...) insbesondere nur zwei Anschlussöffnungen (41 a, b..) aufweist und / oder
- die Zapfschlitze (32a, b) alle gleich lang sind und der Abstand (34) zwischen den Zapfschlitzen (32a,b) ebenfalls gleich lang ist.

8. Transportvorrichtung nach einem der vorhergehenden Ansprüche,
**dadurch gekennzeichnet, dass**
- der Abstand (34) zwischen zwei benachbarte Zapfschlitzen (32a, b...) kleiner ist als die Länge eines Zapfschlitzes (32a, b) zzgl. des doppelten Durchmessers einer Anschlussöffnung (41 a,b), gemessen in Längsrichtung (10) und / oder
- zwischen Zapföffnungen (32a, b...) und Anschlussöffnungen (41 a, b...) immer ein geringfügiger Höhenabstand (49) zur Kontaktebene verbleibt.

9. Transportvorrichtung nach einem der vorhergehenden Ansprüche,
**dadurch gekennzeichnet, dass**
- jeder Transportschlitten (1a, b...) in Längsrichtung (10) beabstandet mindestens zwei Anschlussöffnungen (41 a,b) aufweist, die entlang des Transportschlittens (1a,b) in Längsrichtung (10) verlagerbar sind zwischen einer Anfangslage (48a) und einer Endlage (48b),
- wenigstens jeder Transportschlitten (1 a,b) einen Anschluss-Antrieb (42) zum Bewegen der Anschlussöffnungen (41 a,b) zwischen der Anfangs- und der Endlage im Transportschlitten (1 a,b) aufweist.

10. Transportvorrichtung nach Anspruch 9,
**dadurch gekennzeichnet, dass**
- alle Zapföffnungen (32a, b..) auf der gleichen in Längsrichtung verlaufenden Zapfspur (36) angeordnet sind und / oder
- der Anschlussantrieb (42) mittels Unterdruck aus der Unterdruckleitung (31) der Führungsbahn (2a,b) betrieben wird.

11. Transportvorrichtung nach Anspruch 10,
**dadurch gekennzeichnet, dass**
- die den einzelnen Anschlussöffnungen zugeordneten Zapföffnungen (32a, b..) auf unterschiedlichen, nebeneinander in Querrichtung beabstandeten Zapfspuren (36a,b) der Führungsbahn (2a,b) angeordnet sind,
- die den jeweils einer Anschlussöffnung (41 a,b) des Transportschlittens (1) zugeordneten Zapföffnungen (32a,b) in der Führungsbahn (2a,b) in regelmäßigen Schrittabständen (39) angeordnet sind, die die Summe der jeweiligen Längendifferenz (38) zwischen Anfangslage (48a) und Endlage (48b) jeder Anschlussöffnung (41 a,b) über alle Anschlussöffnungen (41 a,b) eines Transportschlittens (1a,b) beträgt.

12. Transportvorrichtung nach einem der Ansprüche 9 bis 11,
**dadurch gekennzeichnet, dass**
- der Anschlussantrieb (42) ein Linearantrieb (53) zwischen der beweglichen Anschlussöffnung (41 a,b) und einem ortsfesten Punkt des Transportschlittens (21) ist und / oder
- der Transportschlitten (1a,b) mindestens zwei, besser drei bewegliche Anschlussöffnungen (41 a,b...) aufweist, die auf nebeneinander liegenden, unterschiedlichen Zapfspuren (36a,b,) angeordnet sind,
- jede Anschlussöffnung (41a,b,...) über einen eigenen Anschlussantrieb (42a,b,...) verfügt,
- deren Aktivierung und Deaktivierung über eine gemeinsame Antriebs-Steuerung (18') gesteuert wird, die insbesondere Bestandteil der Steuerung (18) ist.

13. Transportvorrichtung nach einem der Ansprüche 9 bis 11,
**dadurch gekennzeichnet, dass**
- der Transportschlitten (1a,b) zwei Anschlussöffnungen (41 a,b) aufweist, die insbesondere auf der gleichen Zapfspur (36) angeordnet sind, und die Unterdruckleitungen (31') zu den beiden Anschlussöffnungen (41 a, b) in der Mitte der Längserstreckung des Transportschlittens (1) miteinander verbunden sind und jeweils über eine Umlenkrolle (53a, b) geführt sind, und
- insbesondere nur ein einziger Anschlussantrieb (42) vorhanden ist, der zwischen den beiden Umlenkrollen (53a, b) angeordnet ist.

14. Transportvorrichtung nach einem der Ansprüche 9 bis 13,
**dadurch gekennzeichnet, dass**
- die Mündungen der Zapföffnungen (32a,b) bzw. Zapfschlitze (32a,b...) einen Sauger (35) umfassen, deren Saugrand (35a) die Zapföffnung umgibt und sich bei Öffnung des Sperrventiles (33a,b) an der Oberfläche des Transportschlittens (1a,b) um die Anschlussöffnung (41 a,b) herum festsaugt, und / oder
- bei geschlossenem Sperrventil (33a,b) der Saugrand (35a) der Sauger (35) einen Höhenabstand (49) zur Außenfläche des Transportschlittens (1a,b) aufweist.

15. Transportvorrichtung nach einem der vorhergehenden Ansprüche,
**dadurch gekennzeichnet, dass**
- die Zapföffnungen (32a,b) nur entlang derjenigen Führungsbahn (2a,b) angeordnet sind, auf der die Transportschlitten (1a,b) beladen mit Produkten (50) bewegt werden, und / oder
- die Zapföffnungen (32a, b...) entlang jeder Führungsbahn (2a, b..) vorhanden sind und die Steuerung (18) in der Lage ist, auf denjenigen Führungsbahnen (2a, b...), auf denen die Transportschlitten (1a,b) unbeladen bewegt werden, die Sperrventile (33a,b) immer geschlossen zu halten.

16. Transportvorrichtung nach einem der vorhergehenden Ansprüche,
**dadurch gekennzeichnet, dass**
- der Linearantrieb (53) eine pneumatische Kolben-Zylinder-Einheit (46) umfasst mit einer in Längsrichtung (10) verlaufenden Druckfeder (47), und / oder
- der Arbeitsraum (46a) der Kolben-Zylinder-Einheit (46) über eine Unterdruckleitung (31') mit den Anschlussöffnungen (41 a, b) verbunden ist sowie einen Belüftungsausgang (51) aufweist.

17. Transportvorrichtung nach Anspruch 16,
**dadurch gekennzeichnet, dass**
- die Unterdruckleitung (31) mit dem Arbeitsraum (46a) der Kolben-Zylinder-Einheit (46) über ein 3-Wege-Ventil (52) verbunden ist, die den Arbeitsraum (46a) wahlweise mit der Unterdruckleitung (31) oder dem Belüftungsausgang (51) verbindet, und / oder
- die beweglichen Anschlussöffnungen (41a, b...) jeweils ein einem längsverschieblichen im Transportschlitten (1a, b...) geführten Anschlussblock (43a, b...) angeordnet sind.
